# EUROPEAN PATENT APPLICATION

(11) **EP 3 493 121 A1**
(43) Date of publication of application: **05.06.2019**
(21) Application number: 18207754.5
(22) Date of filing: 22.11.2018
(51) Int. Cl.: G06Q 10/00

(54) **DEVICE MANAGEMENT APPARATUS, TERMINAL APPARATUS, DEVICE MANAGEMENT SYSTEM, DEVICE MANAGEMENT METHOD, PROGRAM, AND RECORDING MEDIUM**

(30) Priority: 30.11.2017 JP 2017231167
(71) Applicant: Yokogawa Electric Corporation, Tokyo 180-8750 (JP)
(72) Inventor: SHIBAMURA, Junpei, Tokyo, Tokyo 180-8750 (JP)
(74) Representative: Osha Liang

(57) **Abstract**

A device management apparatus includes a memory and a processor. The memory stores device individual information which includes information about a current state of a device and which is information unique to the device. The processor receives information about an action for the device from an external terminal apparatus, derives a subsequent state of the device on the basis of the current state of the device and the action for the device by referring to a definition of a state transition defined in advance, and makes transition from the current state to the subsequent state.

## Description

### Technical Field

The present invention relates to a device management apparatus, a terminal apparatus, a device management system, a device management method, a program, and a recording medium.

The present application claims priority based on Japanese Patent Application No. 2017-231167 filed on November 30, 2017, the contents of which are incorporated herein by reference.

### Related Art

A system in which field devices such as a measuring device or an operating device and a control apparatus controlling the field devices are linked by communication means is established in industrial plants for manufacturing chemical products, plant for managing and controlling well sites of, e.g., gas fields and oil fields and their surroundings, plants for managing and controlling power generation such as hydraulic power, thermal power, and nuclear power, plants for managing and controlling environmental power generation such as sunlight and wind power, and plants for managing and controlling, e.g., water supply systems, sewage, and dams, (hereinafter collectively referred to as "plants").

Conventionally, companies and the like used to establish their own Computerized Maintenance Management System (CMMS) and Enterprise Asset Management (EAM) to manage information about device assets.

Japanese Unexamined Patent Application Publication No. 2004-029897 describes a management system for acquiring information from a device in a plant and editing a device register according to the hierarchy of the plant.

However, the conventional device management has the following problems.

There used to be a discrepancy between the information held by a staff member who performs device maintenance and the like and the information which can be accessed by a manager. The reason for this discrepancy occurred because the staff member neglected to report to the manager or made a mistake in reporting. When the information involves such discrepancy, the manager cannot properly understand the situations of the devices at the site and cannot properly perform management. As a result, it used to be impossible to establish an appropriate maintenance plan or budget plan.

More specifically, the conventional device management involves the following drawbacks.

The first drawback is that the actual locations and situations of the devices could not be understood systematically.

The second drawback is that the individual devices were not managed, and instead, only the number of devices for each type (model number) common to multiple devices was managed.

The third drawback is that the exact number of spare devices (such as devices stored for replacement) could not be accurately counted. For example, a device might be falsely registered as existing in the register stored in the computer even though the device actually does not exist. For example, conversely, a device might be falsely registered as not existing in the register stored in the computer even though the device actually does exist.

The fourth drawback is that it used to be difficult for the manager to understand information about whether or not the maintenance work of the device was performed properly.

The fifth drawback is that it used to be difficult for the manager to understand information on failing to install devices and wrongly installing devices. Also, it used to be difficult for the manager to understand information on failing to remove devices.

The sixth drawback is that, for example, tag information about an old device is falsely set as tag information about a new device with which the old device is replaced, and when a device is removed, a staff member might have failed to change tag information, e.g., failing to delete tag information about the removed device. As a result, the information about the devices in the whole plant might have been inaccurate.

The seventh drawback is that it used to be difficult for the manager to understand the implementation situation of calibration of devices.

In addition, there was a problem in that, for example, it was not possible to register information to a device management system at a site of device maintenance work, which is also related to the above-mentioned first to seventh drawbacks. With the conventional technique, it used to be necessary to take the information at the site back to the office in the form of handwritten materials or memos and register the information in the office. For this reason, there used to be a problem in that, e.g., failure to register information and delay in registering information may have occurred.

### Summary

A device management apparatus according to an aspect of the present invention includes a storage unit for storing device individual information which includes information about a current state of a device and which is information unique to the device, and a processing unit for receiving information about an action for the device from an external terminal apparatus, deriving a subsequent state of the device on the basis of the current state of the device and the action for the device by referring to a definition of a state transition defined in advance, and making transition from the current state to the subsequent state.

Further features and aspects of the present disclosure will become apparent from the following detailed description of exemplary embodiment with reference to the attached drawings.

### Brief Description of Drawings

FIG. 1 is a functional block diagram illustrating a schematic functional configuration of a device management system according to an embodiment of the present invention.
FIG. 2 is a device state transition diagram illustrating transition of state of a device when the device management system according to the embodiment manages the device.
FIG. 3 is a schematic diagram illustrating a configuration and data example of device individual information stored in a storage unit of the device management apparatus according to the embodiment.
FIG. 4 is a schematic diagram illustrating a configuration and data example of device history information stored by the storage unit of the device management apparatus according to the embodiment.
FIG. 5 is a schematic diagram illustrating a configuration and data example of model number unique information stored in the storage unit of the device management apparatus according to the embodiment.
FIG. 6 is a sequence diagram illustrating a processing example in the operation of the device management system according to the embodiment.
FIG. 7 is a schematic diagram illustrating an example of a dashboard screen displayed when a user logs in to the device management apparatus according to the embodiment.
FIG. 8 is a schematic diagram illustrating a configuration example of information presented in a form of a device list by the device management apparatus according to the embodiment.
FIG. 9 is an example of data displayed on a screen of a PC by the device management apparatus according to the embodiment and is a schematic diagram illustrating tag history data that can be used for a device maintenance plan.
FIG. 10 is another example of data displayed on the screen of the PC by the device management apparatus according to the embodiment and is a schematic diagram illustrating tag history data that can be used for the device maintenance plan.
FIG. 11 is a schematic diagram illustrating definition information about user interface with which a mobile terminal apparatus according to the embodiment receives input of an action.
FIG. 12 is a schematic diagram illustrating an example in which the mobile terminal apparatus according to the embodiment displays candidates of actions for the device on the screen.

### DETAILED DESCRIPTION OF THE EMBODIMENT

The embodiment of the present invention will be now described herein with reference to illustrative preferred embodiment. Those skilled in the art will recognize that many alternative preferred embodiment can be accomplished using the teaching of the present invention and that the present invention is not limited to the preferred embodiment illustrated herein for explanatory purposes.

An aspect of the present invention is to provide a device management apparatus with which information can be registered at a site of a device maintenance work and the like, and information about devices can accurately maintained and managed.

Subsequently, an embodiment of the present invention will be described with reference to the drawings.

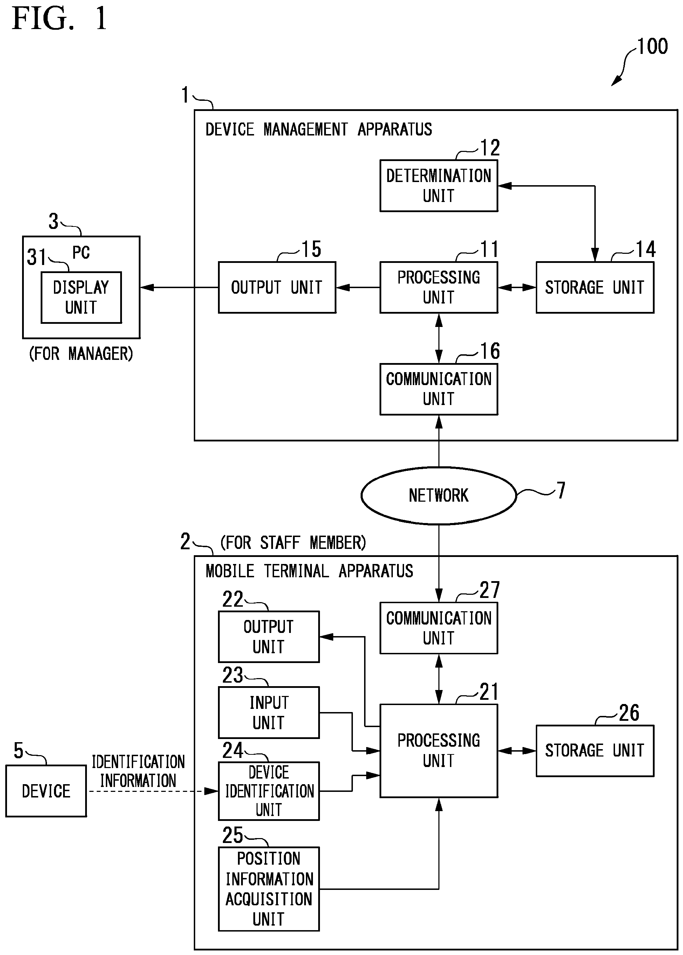

FIG. 1 is a functional block diagram illustrating a schematic functional configuration of a device management system according to an embodiment of the present invention. The device management system 100 is a system for managing a plurality of devices 5 as individual bodies. As illustrated in the FIG. 1, the device management system 100 includes a device management apparatus 1, a mobile terminal apparatus 2, a personal computer 3 (PC), and a network 7. The device management system 100 is a Device Lifecycle Management solution and supports the management of device equipment, budget planning, and maintenance plan in plant maintenance work.

The device management apparatus 1 collects, stores, and manages the information about the device 5. The device management apparatus 1 receives and accumulates information about the device 5 from the mobile terminal apparatus 2. The device management apparatus 1 can also perform bulk loading to collectively load information about the device 5 from the external apparatus and the like. The collective loading may also be referred to as digital handover. The device management apparatus 1 stores device unique information for each device. The device unique information includes the current state of the device (current situation of device), information about flags, supplementary information about actions, tag information, various files, and free comments. Also, the device management apparatus stores unique information about a type of a device (model number). The information unique to the model number includes information about a specification of the device, information about a specification document and a work procedural manual about the device, and the like. The device management apparatus 1 stores the state of each device 5 at each time point and updates the state of the device 5 (makes state transition) according to a definition of state transition held in advance. The device management apparatus 1 also stores a history of state transition in the past and a history of information about the values of flag. In addition, the device management apparatus 1 makes determination on an alarm condition and a recommendation condition according to the determination condition. Also, the device management apparatus 1 outputs, e.g., the situation of the device via the PC 3, for example. The device management apparatus 1 is achieved with, for example, a server computer. The device management apparatus 1 may be constituted by using a so-called cloud server. It should be noted that the device management apparatus 1 may be achieved with an integrated apparatus or may be achieved by being distributed in different apparatuses.

The mobile terminal apparatus 2 is a terminal apparatus mainly used by a maintenance staff member to manage the device 5 and is used at the site where the device 5 is installed. The mobile terminal apparatus 2 has a function of reading information for identifying the device 5. Also, the mobile terminal apparatus 2 has a function of finding the position of the mobile terminal apparatus 2. In addition, the mobile terminal apparatus 2 has a function of inputting information about actions and the like for the device 5 through operation performed by the user (staff member). The mobile terminal apparatus 2 stores the acquired information and transmits information to the device management apparatus 1. In addition, the mobile terminal apparatus 2 receives information from the device management apparatus 1 and presents information to the user. The mobile terminal apparatus 2 is achieved by using, for example, a PC, a tablet terminal, a smartphone (smartphone), a wearable terminal, or the like.

Although FIG. 1 illustrates only one mobile terminal apparatus 2, a plurality of mobile terminal apparatuses 2 may be included in the device management system 100.

The PC 3 is for displaying the information outputted from the device management apparatus 1. The PC 3 is used, for example, by a manager who manages the device management task. The PC 3 includes a display unit 31, and the display unit 31 displays information on a display apparatus or the like. Further, the PC 3 may acquire information input through operation performed by a user (manager, leader, etc.), or may pass that information to the device management apparatus 1. The PC 3 has a function of transmitting and receiving data to and from the device management apparatus 1. As an example, the PC 3 may have a function of a web browser, and the user may browse the information output from the device management apparatus 1 or input information to the device management apparatus 1 via the web interface.

The network 7 is communication means enabling data to be transmitted and received between the device management apparatus 1 and the mobile terminal apparatus 2. The network 7 is achieved using wireless communication or wired communication. In the network 7, for example, communication based on internet protocol (IP) is performed. For example, the network 7 is a communication network such as the Internet, local area network, cellular network, and the like. It should be noted that the network 7 may be used for communication between the device management apparatus 1 and the PC 3.

The device 5 is a device to be managed by the device management system 100. The device 5 is, for example, a measuring device, an operating device, a converting device, or the like which are constituent elements of the plant. The device 5 has individual identification information of its own. This individual identification information is information capable of uniquely identifying the device 5. The individual identification information is read by the mobile terminal apparatus 2 as, for example, optical pattern information (bar code, two-dimensional code, etc.) or with an RFID (radio frequency identification apparatus). For example, a label printed with a two-dimensional code may be affixed to the device 5 main body. For example, the two-dimensional code may be printed on a packaging box of the device 5. For example, the two-dimensional code may be printed on a slip (such as a delivery slip or a delivery slip) about the device 5. For example, the individual identification information is formed by combining information for identifying a vender, information for identifying a model (such as a model number), a serial number within the model number, and the like. The individual identification information may be information already defined at the time of shipping from the vendor or may be information determined by the user (introducing enterprise etc.). More specifically, the device 5 is a device such as a flow meter, a thermometer, a hygrometer, a pressure gauge, a valve such as a valve, a pump, an actuator, etc. and is an element constituting a plant and the like.

Although FIG. 1 illustrates only one device 5, a plurality of devices 5 may be included in the device management system 100.

Next, a more detailed functional configuration of the device management apparatus 1 and the mobile terminal apparatus 2 will be described.

As illustrated in FIG. 1, the device management apparatus 1 includes a processing unit 11, a determination unit 12, a storage unit 14, an output unit 15, and a communication unit 16. Each unit constituting the device management apparatus 1 is achieved by, for example, an electric circuit. In addition, each unit is provided with a storage means such as a semiconductor memory or a magnetic hard disk apparatus as necessary. Also, each unit may be achieved by a computer and a program.

The processing unit 11 manages and maintains the information about the device stored in the storage unit 14. In response to a data query from the mobile terminal apparatus 2 or the PC 3, the processing unit 11 reads the device information from the storage unit 14 and provides the device information. Further, the processing unit 11 updates the information about the device 5 stored in the storage unit 14 based on the data received from the mobile terminal apparatus 2 and the PC 3. When the processing unit 11 presents data to the mobile terminal apparatus 2 or the PC 3, the processing unit 11 appropriately performs data processing. Further, the processing unit 11 performs processing for ordering devices 5 (including parts and the like) and requesting work for the devices 5. In particular, the processing unit 11 receives information about an action for the device 5 from the external mobile terminal apparatus 2, refers to ta definition of a predetermined state transition to find the next state of the device 5 (the situation of the device to which transition is made from the current state) based on the current state of the device 5 and the action for the device 5, and updates the information about the current state of the device 5 to the subsequent state. That is, the processing unit 11 performs a process of obtaining the subsequent state of the device 5 and transitioning from the current state to the subsequent state. At this time, the processing unit 11 may receive the information about the action selected from the list of actions related to the current state of the device 5 displayed on the screen of the mobile terminal apparatus 2. In addition, upon receiving the information about the action from the mobile terminal apparatus 2, the processing unit 11 determines whether to update at least one of a value of an initial check flag (a flag indicating whether the initial check of the device 5 has been completed or not) and a value of a maintenance requirement flag (a flag indicating whether maintenance of the device 5 is to be performed or not) in accordance with the definition of the state transition.

The determination unit 12 determines whether the information about the device 5 stored by the storage unit 14 meets a given determination condition. The determination condition is a condition for generating an alarm or a condition for generating a recommendation to the user. The determination condition itself is stored in the storage unit 14, for example. It should be noted that the determination condition is, for example, a condition indicating whether or not the following timing is satisfied. That is, an example of a condition for generating a recommendation is a condition indicating whether or not it is a predetermined timing to prompt a user to perform a predetermined action. An example of a condition for generating an alarm is a condition indicating whether or not a user ignores a prompt and does not perform a predetermined action.

The storage unit 14 stores various kinds of information about the device 5. The storage unit 14 may have, for example, an HDD (Hard Disk Drive), an SSD (Solid State Drive), and memories such as flash memory, a RAM (Random Access Memory), a ROM (Read Only Memory), and the like. More specifically, the storage unit 14 includes at least device individual information which is information representing attributes of the device 5 and the like, device history information which is an information representing a history about an action for the device 5 and a state change of the device 5, model number unique information which is information unique to the model number, and the definition of the state transition explained later. More specifically, for each device 5, the storage unit 14 stores the history about the state transition performed in the past and the information about the history of actions received in the past in association with each other. In addition, the storage unit 14 stores flag information for each device 5. The flag information includes an initial check flag indicating whether the initial check of the device 5 has been completed or not and a maintenance requirement flag indicating whether maintenance of the device 5 is to be carried out or not. The maintenance requirement flag is also referred to as "maintenance flag". The information held by the storage unit 14 will be described in more detail later with reference to another drawings.

The output unit 15 outputs data to the PC 3. The output unit 15 provides data with, for example, a web interface. In this case, the output unit 15 may have, for example, a web server realized with web server software, and a network interface such as an Ethernet interface card and a wireless network interface.

The communication unit 16 performs data communication with the mobile terminal apparatus 2 via the network 7. The communication unit 16 may have a network interface such as an Ethernet interface card and a wireless network interface. For example, the communication unit 16 receives the identification information about the device 5 from the mobile terminal apparatus 2. Also, for example, the communication unit 16 receives information about the action of the device 5 from the mobile terminal apparatus 2. In addition, the communication unit 16 transmits the device unique information read from the storage unit 14 to the mobile terminal apparatus 2.

Some of the functions of the output unit 15 may be performed by the communication unit 16.

The mobile terminal apparatus 2 includes a processing unit 21, an output unit 22, an input unit 23, a device identification unit 24, a position information acquisition unit 25, a storage unit 26, and a communication unit 27. Each unit constituting the mobile terminal apparatus 2 is achieved by, for example, an electric circuit. In addition, each unit is provided with a storage means such as a semiconductor memory or a magnetic hard disk apparatus as necessary. Also, each unit may be achieved by a computer and a program.

The processing unit 21 performs information processing. For example, the processing unit 21 transmits the identification information acquired by the device identification unit 24 to the device management apparatus 1 via the communication unit 27, and outputs the device unique information received from the device management apparatus 1 from the output unit 22, receives information about the action for the device 5 from the input unit 23, and transmitting the information to the device management apparatus 1 via the communication unit 27. More specifically, the processing unit 21 receives information about the current state of the device 5 from the device management apparatus 1, refers to the predetermined definition of the action related to the current state to display actions related to the current state on the screen as a list in a selectable manner. Further, the processing unit 21 selects information about an action from the selectable actions (list) according to user's operation or the like, and passes the information about the action to the communication unit 27 for transmission to the device management apparatus 1.

The output unit 22 outputs information. The output unit 22 outputs information on a liquid crystal screen or the like, for example.

The input unit 23 receives information from the outside by input means such as a touch panel. For example, the input unit 23 receives an input of an action for the device 5 identified with the individual identification by the device identification unit 24. The input unit 23 receives supplementary information about the action. In addition, the input unit 23 may receive free unit comments about the device 5.

The device identification unit 24 has a function of identifying the device 5 by reading the identification information for identifying the device 5. For example, when the information identifying the device 5 is represented by two-dimensional code, the device identification unit 24 may include, for example, a camera, and the information identifying the device 5 may use the camera to optically read the two-dimensional code and extract the identification information. Further, for example, when the information for identifying the device 5 is transmitted by an RFID (ID by radio frequency), the device identification unit 24 may have, for example, a radio transceiver including a transmitter and a receiver, and the device identification unit 24 may use the radio transceiver to receive the radio signal and acquire the identification information. The method with which the device identification unit 24 acquires the identification information is not limited to the use of the radio transceiver. The device identification unit 24 may read the identification information from the device 5 by using electrostatic coupling, electromagnetic coupling, electromagnetic induction, radio wave, and optical communication, and the like.

The position information acquisition unit 25 acquires the information about the position of the mobile terminal apparatus 2. For example, the position information acquisition unit 25 acquires the position of the mobile terminal apparatus 2 based on radio signals from a plurality of artificial satellites using the function of the GPS (Global Positioning System). The position information acquisition unit 25 acquires the position information of the mobile terminal apparatus 2, for example, as the values of longitude and latitude.

The storage unit 26 stores information at least temporarily. The storage unit 26 may have, for example, an HDD (Hard Disk Drive), an SSD (Solid State Drive), and memories such as flash memory, a RAM (Random Access Memory), a ROM (Read Only Memory), and the like.

The communication unit 27 performs data communication with the device management apparatus 1 via a communication network, for example. For example, the communication unit 27 transmits the identification information about the device 5 acquired by the device identification unit 24 to the device management apparatus 1. For example, the communication unit 27 transmits, to the device management apparatus 1, information relating to the action for the device 5 that is set by user's operation or the like. More specifically, the communication unit 27 transmits the information about the action selected by the processing unit 21 to the device management apparatus 1. In addition, the communication unit 27 receives from the device management apparatus 1 the information unique to the device 5.

Subsequently, the state transition of the device 5 to be managed will be described.

In the device management system 100, the definition of the state of device 5 is as illustrated in Table 1 below. In Table 1, ST01 to ST16 are symbols given for convenience in order to identify the respective states.

**[Table 1]**

| | STATE NAME | DEFINITION |
|---|---|---|
| ST01 | Shipped | State in which a device has been shipped from vendor, but has not yet been delivered to user. |
| ST02 | Delivered | State in which a device has been delivered to user, but the device has not yet been accepted, or has been rejected. |
| ST03 | Accepted | State in which a device has been accepted by the user (=waiting for check-in). |
| ST04 | Declined | State in which a device has been rejected by the user (wrong parameters etc.). |
| ST05 | Stocked | State in which a device has been stocked in warehouse. |
| ST06 | Disposed | State in which a device has been disposed (the device is impossible to be repaired, or has reached its lifetime). |
| ST07 | Lost | State in which a device is lost. |
| ST08 | Checked-out | State in which a device has been checked out from warehouse. |
| ST09 | Installed | State in which a device is installed (assigned with tag). |
| ST10 | Removed | State in which a device has been removed. After this, the device will be most likely to be repaired or disposed. |
| ST11 | Unknown-device | State in which a device has been discovered but the role of the device is unknown. |
| ST12 | Designed | State in which the user or EPC has decided the specification, but has not yet ordered the device. |
| ST13 | Ordered | State in which the device has been ordered from vendor, but the device has not yet been manufactured. |
| ST14 | Manufactured | State in which the device has been manufactured by vendor, but has not yet been shipped. |
| ST15 | Send-back Repair | State after the device has been sent back to vendor for "send-back repair" but before the vendor returns the repaired device back to the plant. |
| ST16 | Send-back Calibration | State after the device has been sent back to vendor for "send-back calibration" but before the vendor returns the calibrated device back to the plant. |

Also, apart from the state shown in Table 1, there are flags (also referred to as "device flags") indicating specific situations of each device 5 as ON or OFF. The flags are as illustrated in Table 2 below.

**[Table 2]**

| FLAG NAME | DEFINITION | CONTENT |
|---|---|---|
| Maintenance Requirement Flag | Whether or not maintenance is required | ON/OFF |
| Initial Check Flag | Whether or not initial operation has been confirmed | ON/OFF |

When the maintenance requirement flag is ON, this indicates that the maintenance staff member has found a failure or malfunction of the device and that maintenance of the device is required. When the maintenance requirement flag is OFF, this means that maintenance of the device 5 in question is not required. When the initial check flag is ON, this means that it has been confirmed that the device operates normally when the device 5 is accepted and that the initial operation of the device 5 has been confirmed. When the initial check flag is OFF, this means that the initial operation confirmation has not been made yet. These flags are stored in the storage unit 14 of the device management apparatus 1 as will be described later.

A list of actions related to the state transition of the device 5 is illustrated in Table 3 below. Table 3 illustrates the name of an action, its definition, supplementary information about the action, and the person who carries out the action. For example, the definition of an action named "Ship" is "shipping device", the supplementary information about this action is "shipping company's delivery management number", the main implementer of this action is the vendor of the device 5. The same applies to other actions included in Table 3.

**[Table 3]**

| ACTION NAME | DEFINITION | SUPPLEMENTARY INFORMATION ABOUT ACTION | MAIN IMPLEMENTER |
|---|---|---|---|
| Ship | Ship device | Delivery management number of delivery company | VENDOR |
| Receipt | Physically receive device | | PURCHASING MEMBER |
| Accept | Give OK in acceptance inspection of device | | PURCHASING MEMBER |
| Decline | Give NG in acceptance inspection of device | Reason | PURCHASING STAFF MEMBER |
| Check-in | Check-in device | Location | WAREHOUSE STAFF MEMBER |
| Location Change | Change location of device | Location | WAREHOUSE STAFF MEMBER |
| Found | Discover unregistered device | | WAREHOUSE MEMBER |
| Dispose | Dispose device | Reason | WAREHOUSE STAFF MEMBER |
| | | | MAINTENANCE STAFF MEMBER |
| Lost | Device is lost | | WAREHOUSE STAFF MEMBER |
| Check-out | Check-out device | | MAINTENANCE STAFF MEMBER |
| Install | Install device (assign tag at the same time) | Location | MAINTENANCE STAFF MEMBER |
| | | GPS Coordinate | |
| | | Tag No | |
| Maintenance | Maintenance of device | Maintenance requirement flag OFF | MAINTENANCE STAFF MEMBER |
| Remove | Remove device (remove device from tag at the same time) | Location | MAINTENANCE STAFF MEMBER |
| Send-back Repair | Send device to vendor for send-back repair | | MAINTENANCE STAFF MEMBER |
| Send-back Calibration | Send device to vendor for send-back calibration | | MAINTENANCE STAFF MEMBER |
| Factory Repair | Device is being repaired in send-back repair | Delivery management number of delivery company | VENDOR |
| Factory Calibration | Device is being calibration in send-back calibration | Delivery management number of delivery company | VENDOR |
| Change Tag No. | Change Tag Number | Tag Number | MAINTENANCE STAFF MEMBER |
| Request Maintenance | Request maintenance work | Reason | MAINTENANCE STAFF MEMBER |
| | | Maintenance requirement flag ON | |
| Estimate & Order | Estimate & Order | Purchase order | EPC CONSTRUCTON STAFF MEMBER MAINTENANCE STAFF MEMBER |
| Manufactured | Manufactured | | VENDOR |

Note that the information illustrated in Table 1, Table 2, and Table 3 are stored in advance in the storage unit 14 of the device management apparatus 1. Further, these pieces of information may be stored in the storage unit 26 of the mobile terminal apparatus 2. When these pieces of information are stored in the storage unit 14 or the storage unit 26, the storage area may be a table inside the program module.

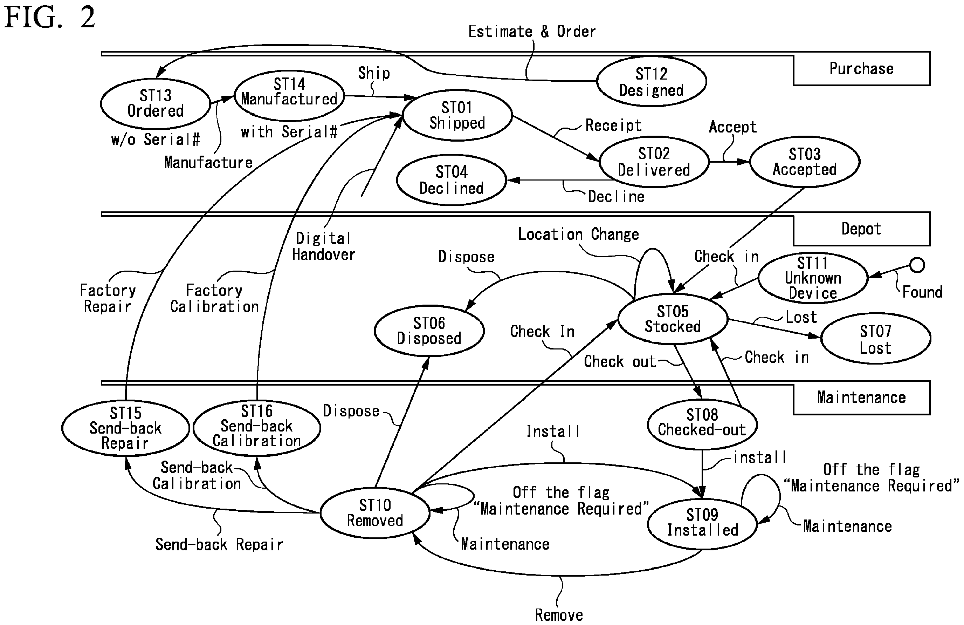

FIG. 2 is a device state transition diagram illustrating transition of state of the device 5 when the device management system 100 manages the device 5.

As illustrated in FIG. 2, the state transition is as follows. A state transition can be defined as a set of combinations of a previous state, an action, and a subsequent state.

The storage unit 14 of the device management apparatus 1 stores in advance the definition of this state transition. The device state transition expressed in FIG. 2 may be stored in the storage unit 14 as a two-dimensional state transition table in which a row indicates a current state of the device 5, a column indicates a subsequent state of the device 5, and an intersection of the row and the column indicates a corresponding action. More specifically, the state transition table can be expressed as a database, a text file in, e.g., XML or CSV format, or as an array, a function, a structure, a class, and the like in a source code of a program. How the device state transition illustrated in FIG. 2 is implemented on the device management apparatus 1 is not particularly limited. As long as the relationship between a current state of the device 5, a subsequent state of the device 5, and a corresponding action can be expressed, any method may be employed. The two-dimensional state transition table is an example of "definition of state transition".

The processing unit 11 determines a subsequent state based on the current state and the action by referring to the definition of the state transition and performs processing to update the state of the device (i.e., make state transition).

Relationships between the previous state, the action, and the subsequent state illustrated in FIG. 2 will be hereinafter listed.
(1) When an action "receipt" is input in the previous state "Shipped" (ST01), transition is made to a subsequent state "Delivered" (ST0).
(2) When an action "Accept" is input in the previous state "Delivered" (ST02), transition is made to a subsequent state "Accepted" (ST03).
(3) When an action "Declined" is input in the previous state "Delivered" (ST02), transition is made to a subsequent state "Declined" (ST04).
(4) When an action "Check-in" is input in the previous state "Accepted" (ST03), transition is made to a subsequent state "Stocked" (ST05).
(5) Any state transition from the previous state "Declined" (ST04) to another state is not defined.
(6) When an action "Location Change" is input in the previous state "Stocked" (ST05), transition is made to a subsequent state "Stocked" (ST05).
(7) When an action "Disposed" is input in the previous state "Stocked" (ST05, Stocked), transition is made to a subsequent state "Disposed" (ST06).
(8) When an action "Lost" is input in the previous state "Stocked" (ST05), transition is made to a subsequent state "Lost" (ST07).
(9) When an action "Check-out" is input in the previous state "Stocked" (ST05), transition is made to a subsequent state "Checked-out" (ST08).
(10) Any state transition from the previous state "Disposed" (ST06)to another state is not defined.
(11) Any state transition from the previous state "Lost" (ST0) to another state is not defined.
(12) When an action "Check-in" is input in the previous state "Checked-out" (ST08), transition is made to a subsequent state "Stocked" (ST05).
(13) When an action "Install" is input in the previous state "Checked-out" (ST08), transition is made to a subsequent state "Installed" (ST09).
(14) When an action "Maintenance" is input in the previous state "Installed" (ST09), transition is made to a subsequent state "Installed" (ST09).
(15) When an action "Remove" is input in the previous state "Installed" (ST09), transition is made to a subsequent state "Removed" (ST10).
(16) When an action "Check-in" is input in the previous state "Removed" (ST10), transition is made to a subsequent state "Stocked" (ST05, Stocked).
(17) When an action "Disposed" is input in the previous state "Removed" (ST10), transition is made to a subsequent state "Disposed" (ST06).
(18) When an action "Install" is input in the previous state "Removed" (ST10), transition is made to a subsequent state "Installed" (ST09).
(19) When an action "Maintenance" is input in the previous state "Removed" (ST10), transition is made to a subsequent state "Removed" (ST10).
(20) When an action "Send-back Repair" is input in the previous state "Removed" (ST10), transition is made to a subsequent state "Send-back Repair" (ST15).
(21) When an action "Send-back Calibration" is input in the previous state "Removed" (ST10), transition is made to a subsequent state "Send-back Calibration" (ST16).
(22) When an action "Check-in" is input in the previous state "Unknown-device" (ST11), transition is made to a subsequent state "Stocked" (ST05).
(23) When an action "Estimate and Order" is input in the previous state "Designed" (ST12), transition is made to a subsequent state "Ordered" (ST13).
(24) When an action "Manufacture" is input in the previous state "Ordered" (ST13), transition is made to a subsequent state "Manufactured" (ST14).
(25) When an action "Ship" is input in the previous state "Manufactured" (ST14), transition is made to a subsequent state "Shipped" (ST01).
(26) When an action "Factory Repair" is input in the previous state "Send-back Repair" (ST15), transition is made to a subsequent state "Shipped" (ST01).
(27) When an action "Factory Calibration" is input in the previous state "Send-back Calibration" (ST16), transition is made to a subsequent state "Shipped" (ST01).
(28) When an action "Found" is input from any given state (including situations where the device is not registered), transition is made to a subsequent state "Unknown-device" (ST11, Unknown Device).
(29) Upon an action "Digital Handover (collective registration of data of devices 5)" from any given state (including situations where the device is not registered), transition is made to a subsequent state "Shipped" (ST01). A typical case in which the action "Digital Handover" is used is when the state of the device, which had been "Ordered" and then transitioned to "Manufactured" is updated to "Shipped" on the basis of the data collectively registered. In this case, the sequence from "Order" to "Ship" of the device is as follows. That is, 1) at the time of ordering the device, the data of the ordered devices 5 is sent from an order management system to the device management apparatus 1, and the device management apparatus 1 automatically registers the devices 5. At this time, the states of these devices 5 are set to "Ordered". 2) Next, when the production of these devices 5 is completed at the factory of the vendor of the devices 5, the data of those devices 5 are sent from a production system of the factory to the device management apparatus 1. The device management apparatus 1 updates the states of these devices 5 to "Manufactured". At the time of ordering or manufacturing, the serial numbers of the devices 5 are determined and registered in the device management apparatus 1. 3) Next, when these devices 5 are to be shipped from the vendor, data of those devices 5 are sent to the device management apparatus 1 from one of the production system at the vendor side, the order management system at the purchaser side, and the like. The data sent here contains a list of the serial numbers of the target devices 5. The device management apparatus 1 updates the current states in the data of the target devices 5 to "Shipped" by using (associating) the serial numbers as keys.

In the above procedure, for example, a method of importing (performing Digital Handover) text data having a list of serial numbers into the device management apparatus 1 can be used as a method for passing the data of the devices 5 from an external system (order management system, production system, etc.) to the device management apparatus 1. Alternatively, the list of the serial numbers may be manually entered by the user of the device management apparatus 1.

An example of a procedure in the case of registering data in the device management apparatus 1 in three stages, e.g., "Order", "Manufacture", and "Ship" has been hereinabove described. However, for example, a procedure adapted to the business process may be used as appropriate, such as omitting data registration at the time of "Order" or omitting data registration at the time of "Manufacture".

As also illustrated in FIG. 2, the states are largely divided into three groups, e.g., "Purchase", "Depot", and "Maintenance". The states which belong to "Purchase" include "Shipped (ST01)", "Delivered (ST02)", "Accepted (ST03)", "Declined (ST04)", "Designed (ST12)", "Ordered (ST13)", and "Manufactured (ST14)". The states which belong to "Depot" include "Stocked (ST05)", "Disposed (ST06)", "Lost (ST07)", and "Unknown-device (ST11)". The states which belong to "Maintenance" include "Checked-out (ST08)", "Installed (ST09)", "Removed (ST10)", "Send-back Repair (ST15)", and "Send-back Calibration (ST16)".

Subsequently, the data held by the device management apparatus 1 will be described.

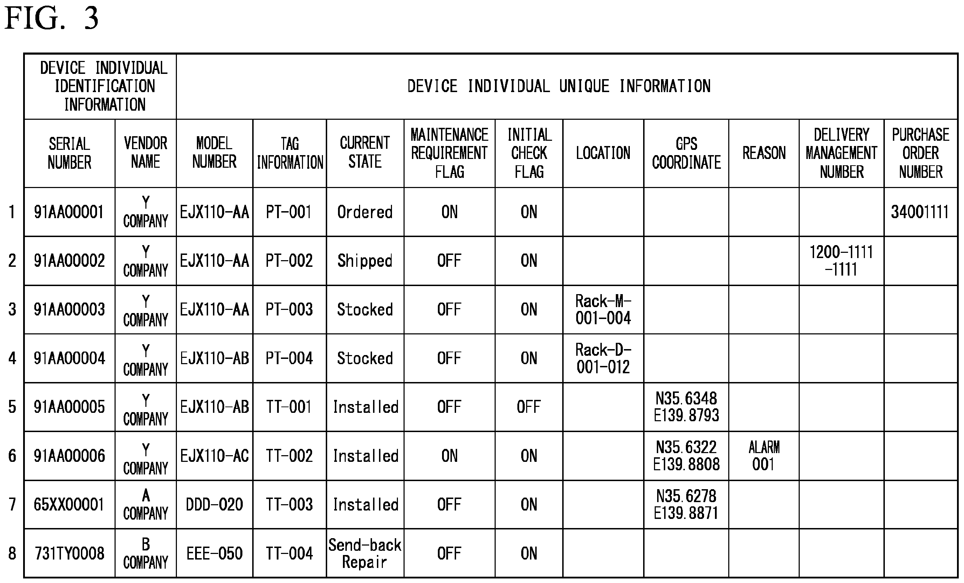

FIG. 3 is a schematic diagram illustrating a configuration and data example of device individual information stored in the storage unit 14 of the device management apparatus 1. As illustrated in FIG. 3, the device individual information is data in a table format, and each row of this data corresponds to the device. In FIG. 3, a row number (1 to 8) for reference is added to each row of data. The device individual information has device individual identification information and device individual body unique information. The device individual identification information includes a serial number and a vendor name as data items. The device individual body unique information includes a model number, a tag information, a current state, a maintenance requirement flag, an initial check flag, a location, a GPS coordinate, a reason, a delivery management number, and a purchase order number. The meaning of each data items are as follows.

The serial number is a serial number attached to each of the devices 5. With this serial number, the device can be uniquely identified.

The vendor name is the name of the vendor who manufactures and sells the device.

The model number is information for identifying the type of device.

The tag information is information given to the installation location and the function of the device in the plant or the like owned by the organization that operates the device management system 100. For example, when a device having any given function at any given installation location is replaced with another device, the old replaced device and the new replacing device have different serial numbers from each other, but tag information is taken over from the old replaced device to the new replacing device.

The current state is information indicating the current state of the device.

The maintenance requirement flag and the initial check flag are the flags already explained in Table 2.

The location is information indicating the location where the device exists. For example, when the device is stocked in depot (state is "Stocked"), the information identifying the rack in the depot may be location information. Also, information identifying a rack and information about the position within the rack may be combined as the location information. Instead of information identifying a rack, for example, information identifying a section in depot may be used as the location information.

The GPS coordinate is information representing the location where the device exists, expressed as coordinate values of longitude and latitude. This coordinate information is calculated based on, for example, GPS signals.

The reason is information about reasons to be recorded in association with a predetermined event for the device. For example, when the maintenance requirement flag is "ON" (representing maintenance requirement), information indicating the type of alarm output from the device is recorded in the corresponding field as the reason.

The delivery management number is information that the delivery company and the like has given to identify the cargo of the device en the device delivered. For example, when the state of the device is "Shipped", the information about the delivery management number given from the delivery company side is recorded in the field. Since an information system of the delivery company tracks the cargo using a delivery management number, the location of the device shipped can be checked by querying this delivery management number as a key.

The purchase order number is information for identifying the order of the device. The information about the order of the device can be found by querying the purchase order number as a key.

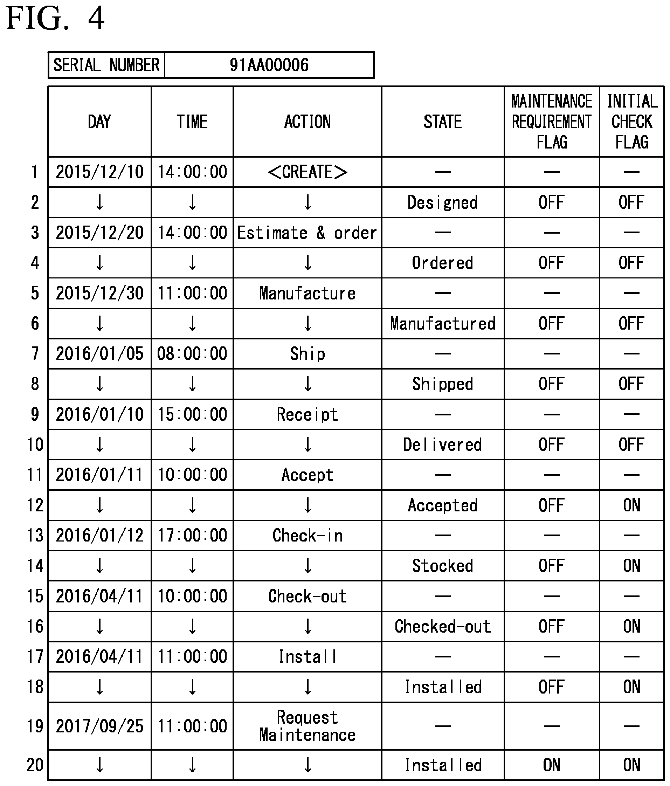

FIG. 4 is a schematic diagram illustrating a configuration and data example of device history information stored by the storage unit 14 of the device management apparatus 1. As illustrated in FIG. 4, the device history information is data representing a history such actions and state transitions of a particular device. The device history information includes the serial number of the device. In addition, the device history information includes information about actions and state transitions in the chronological order, which are input for the device having the serial number. In the illustrated example, the information about the history is represented in a table format. This table includes items of day, time, action, state, maintenance requirement flag, and initial check flag.

The date and time are information indicating a point in time in the history. More specifically, the date and time represent the time at which the associated action is input, or the time at which the action is performed.

The action is information indicating the type of the action.

The state is information indicating the state after the transition.

The maintenance requirement flag is the value of the maintenance requirement flag after the state transition made at the time. When the date and time is "2016/04/11 11:00:00", the state of the device is "Installed", and the value of the maintenance requirement flag is "OFF" indicating that maintenance is not required. Next, when the device management apparatus 1 receives "Request Maintenance" as an action from mobile terminal apparatus 2 at the date and time "2017/09/25 11:00:00", the device management apparatus 1 updates the maintenance requirement flag to "ON" indicating that maintenance is required.

The initial check flag is the value of the initial check flag after the state transition made at the time. When the date and time is "2016/01/10 15:00:00", the state of the device is "Delivered", and the value of the initial check flag is "OFF" which indicates that the initial operation of the device has not been confirmed. Thereafter, the maintenance staff member confirms that the initial operation of the device is normal and receives the device. At this time, upon receiving "Accept" as an action from the mobile terminal apparatus 2, the device management apparatus 1 updates the initial check flag to "ON" indicating that the initial operation has been confirmed.

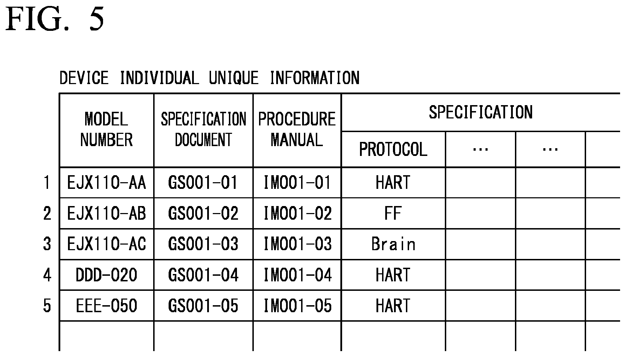

FIG. 5 is a schematic diagram illustrating a configuration and data example of model number unique information stored in the storage unit 14 of the device management apparatus 1. The model number unique information is information unique to the model number (model) of the device, which is information independent from the device. As shown in FIG. 5, the model number unique information is data in a table format and includes items of a model number, a specification document, a procedural manual, and specification. The specification further includes a protocol and the like as an item of a lower layer. The meaning of each data item is as follows.

The model number is information that uniquely identifies the model.

The specification document is information referring to the specification document of the device of the model. The data to be stored in the specification document field may be, for example, the URL (Uniform Resource Locator) of the specification document, or the document management number of the specification document or the like. Alternatively, the specification document itself may be stored in the specification document field of the model number unique information.

The procedural manual is information referring to the procedural manual for installing, calibrating, and operating the device of the model. The data to be stored in the procedural manual field may also be, for example, the URL of the procedural manual or the document management number. Also, the procedural manual document itself may be stored in the procedural manual field.

The specification holds information of various specifications of the device of that model.

The protocol is one of the items included in the above specification and holds information specifying the type of communication protocol used when the device of the model communicates with another device or the like.

The specification may further include data items other than the protocol.

The protocol is one of the items included in the above specification and holds information specifying the type of communication protocol used when the device of the model communicates with another device or the like.

The specification may further include data items other than the protocol.

Next, a procedure in which the device management system 100 operates will be described.

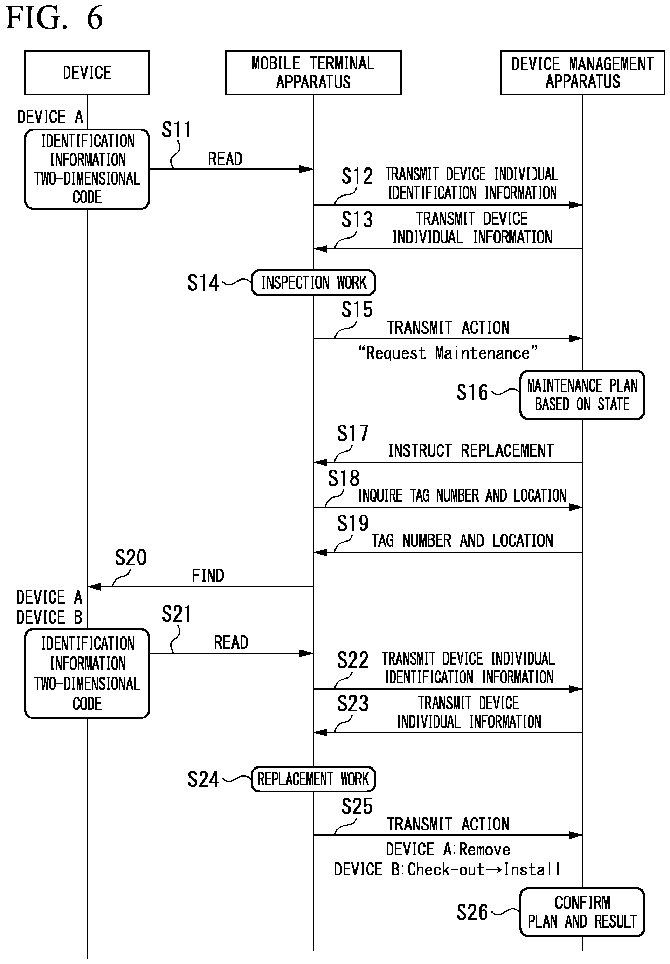

FIG. 6 is a sequence diagram illustrating a processing example in the operation of the device management system 100. The sequence illustrated in FIG. 6 is processing performed by each apparatus and communication among the apparatuses in the device management system 100 when a failed device A (tag information is "PT-001") is replaced with another device "device B". Hereinafter, this sequence will be explained.

First, the maintenance staff member finds that device A has failed.

In step S11, the maintenance staff member operates the mobile terminal apparatus 2, so that the mobile terminal apparatus 2 reads the device individual identification information about the device A. The device individual identification information is, for example, a two-dimensional code attached to the device A.

In step S12, the mobile terminal apparatus 2 transmits the device individual identification information read in step S11 to the device management apparatus 1. The device management apparatus 1 searches for the device individual information using the device individual identification information as a key.

In step S13, the device management apparatus 1 returns to the mobile terminal apparatus 2 the device individual information corresponding to the device individual identification information received in step S12.

In step S14, the maintenance staff member refers to the device individual information about the device A received by the mobile terminal apparatus 2. Also, the maintenance staff member performs inspection work on the device A. As a result of inspection work, the maintenance staff member decides to make a Request Maintenance.

In step S15, the maintenance staff member operates the mobile terminal apparatus 2 to execute processing for performing the Request Maintenance of the device A. More specifically, the mobile terminal apparatus 2 sets an action "Request Maintenance". Also, as the information attached to the action, the reason for the Request Maintenance and the maintenance requirement flag (value is "ON") are set. Then, the mobile terminal apparatus 2 transmits the information about the action "Request Maintenance" of the device A and the supplementary information about the action to the device management apparatus 1.

In step S16, the device management apparatus 1 registers the received information about the action and the supplementary information about the action. Further, based on the received information about the action, the device management apparatus 1 updates the state of the device A and updates the maintenance requirement flag stored in the storage unit 14 to "ON". The manager creates a maintenance plan by referring to the information about the device management apparatus 1 with the PC 3. In doing so, the manager executes processing to search the device individual information held by the device management apparatus 1 and browses the list of devices 5 whose maintenance requirement flags are "ON". The manager will browse the list and decide to replace the device A. More specifically, the manager decides to replace the device A with the device B (current state is Stocked (ST 01)). The manager operates the PC 3 to input information about a replacement instruction for replacing the device to the device management apparatus 1.

In step S17, the device management apparatus 1 transmits the instruction information for replacing the device A with the device B to the mobile terminal apparatus 2. This replacement instruction is performed, for example, by a message exchange function in the device management system 100. Alternatively, an e-mail with a replacement instruction may be transmitted from the device management apparatus 1 to the mobile terminal apparatus 2.

In step S18, the maintenance staff member queries the tag information (Tag Number) about the device A and the location information about the device B by operating the mobile terminal apparatus 2. The mobile terminal apparatus 2 transmits to the device management apparatus 1 a message querying the tag information about the device A and the location information about the device B.

In step S19, the device management apparatus 1 searches for the device unique information in the storage unit 14 based on the message from the mobile terminal apparatus 2 received in step S18. Then, the device management apparatus 1 returns the tag information about the device A and the location information about the device B to the mobile terminal apparatus 2.

In step S20, the maintenance staff member finds device B based on the location information about the device B acquired from the device management apparatus 1.

In step S21, the maintenance staff member operates the mobile terminal apparatus 2, so that the mobile terminal apparatus 2 reads the device individual identification information about the device B. The device individual identification information is, for example, a two-dimensional code attached to device B. At this time, the mobile terminal apparatus 2 may read the device individual identification information about the device A in combination.

In step S22, the mobile terminal apparatus 2 transmits the device individual identification information about the device B read in step S21 to the device management apparatus 1. The device management apparatus 1 searches for device individual information using the device individual identification information as a key.

In step S23, the device management apparatus 1 returns to the mobile terminal apparatus 2 the device individual information corresponding to the device individual identification information received in step S22.

In step S24, the maintenance staff member performs work to replace the device A with the device B.

In step S25, the maintenance staff member operates the mobile terminal apparatus 2 and inputs information about the device replacement. More specifically, the mobile terminal apparatus 2 registers an action "Remove" for the device A. The mobile terminal apparatus 2 registers an action "Check-out" and an action "Install" for the device B. Based on the operation performed by the maintenance staff member, the mobile terminal apparatus 2 registers tag information "Tag no.: PT-001" as accompanying information for the action "Install". The mobile terminal apparatus 2 transmits the information about the action to be registered for each of the devices A and B and the accompanying information to the device management apparatus 1.

In step S26, the device management apparatus 1 writes the information about the action received in step S25 and its accompanying information into the storage unit 14. Also, the device management apparatus 1 performs a state transition with regard to each of the device A and the device B, and updates the information on the current state of each device.

The processing of the sequence illustrated in FIG. 6 has been hereinabove explained.

By using the device management system 100, the manager can check the progress of the work on each device by referring to the information such as the state change of the device.

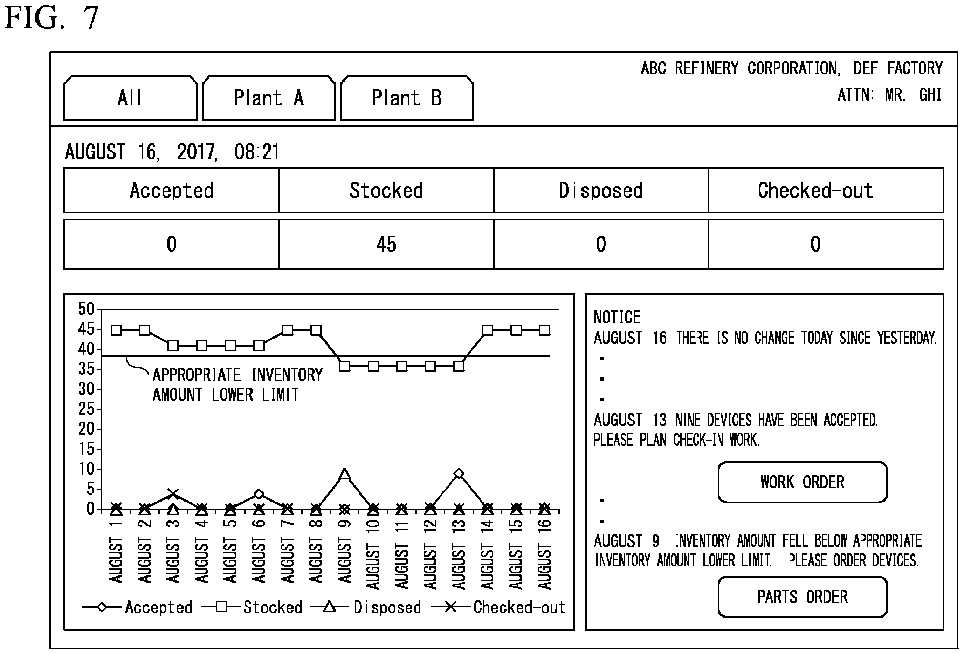

FIG. 7 is a schematic diagram illustrating an example of a dashboard screen displayed when a user, who is the manager, logs in to the device management apparatus 1. The dashboard screen is constituted by information specialized for each user according to the user's role. The screen illustrated in FIG. 7 is constructed by using, for example, web technology. In the illustrated example, the department to which the logged-in user belongs and the name are displayed on the upper right portion of the screen. In addition, on this screen, three tabs "All" (all plants), "Plant A", and "Plant B" are displayed, and the user can select any one of the tabs by clicking the particular tab. By selecting the tab, the user can select whether to display only devices belonging to a specific plant or to display devices belonging to all plants. That is, according to the tab selected, the device management apparatus 1 can switch between a screen for integrating information about a plurality of plants and a screen for displaying information about only one plant. Also, under the tabs, the current date and time (August 16, 2017, 08:21) is displayed. Under the date and time, statistics information about the number of devices in each state are displayed. In the illustrated example of the statistics information, it is indicated that the number of devices in the state "Accepted" is zero, the number of devices in the state "Stocked" is 45, the number of devices in the state "Disposed" is zero, and the number of devices in the state "Checked-out" is zero. The line graph displayed at the lower left portion of the screen illustrates the transition of the number of devices in each state for each date. Among these line graphs, for the device in the state "Stocked", a line indicating an appropriate inventory amount lower limit is also displayed. As a result, the logged-in user can easily understand whether or not the inventory of the device is appropriate. The numerical value of the appropriate inventory amount can be preset for each model number of the device or for each device type. Alternatively, the numerical value of the appropriate inventory amount may be automatically calculated from the data stored in the device management apparatus 1. In the lower right portion of the screen, a field for displaying message is provided. Here, the message for the logged-in user is displayed. Also, a button for executing the work may be displayed together with the message. For example, a button "WORK ORDER" is displayed together with the message "9 devices have been accepted. Please plan check-in work". When this user presses the "WORK ORDER" button, the function for planning Check-in work is started. Also, for example, the message "PARTS ORDER" is displayed together with the message "inventory amount has fallen below the appropriate inventory amount, please order devices". When the user presses the "PARTS ORDER" button, the function for ordering the insufficient devices is activated.

In order to display the screen illustrated in FIG. 7, the processing unit 11 of the device management apparatus 1 performs the following processing.

The processing unit 11 of the device management apparatus 1 outputs statistics information representing the number of devices for each type in the current state at a predetermined timing. In other words, the processing unit 11 outputs various information, including those explained below, based on the number of devices for each type in the current state at a predetermined timing.

Therefore, the processing unit 11 of the device management apparatus 1 refers to the information of the devices belonging to the plant according to the selected tab ("Plant A" etc.), and counts the number of devices in each state ("Accepted", "Stocked", etc.).

The processing unit 11 of the device management apparatus 1 refers to the information (including history) of the devices belonging to the selected plant and counts the number of devices corresponding to each state for each date. Then, the processing unit 11 performs processing to draw a line graph for each state. The processing unit 11 also reads the appropriate inventory amount lower limit value set by the manager or the like from the storage unit 14 and draws a line representing the appropriate inventory amount lower limit superimposed on the drawing area of the graph.

The processing unit 11 of the device management apparatus 1 determines whether or not a change has recently occurred in the information about the devices (e.g. within the last X days (X is a predetermined natural number)). When no change has occurred in the period, the processing unit 11 outputs a message meaning "no change". When a change has occurred in the period, a text summarizing the contents of the change is generated and output as a message. In addition, the processing unit 11 outputs a message indicating that there is an Accepted device that has been recently accepted, and also displays a button for issuing "WORK ORDER". At the present time, the processing unit 11 determines whether or not the number of the devices of the state "Stocked" is less than the appropriate inventory amount lower limit value. When the number of stocked devices is less than the appropriate inventory amount lower limit value, a button for issuing "PARTS ORDER" is displayed.

By managing information about inventory quantity for each model of the devices, statistics information and display "PARTS ORDER" button can be displayed for each model number.

The processing unit 11 performs the processing listed above, and the output unit 15 displays the result on the display unit 31 of the PC 3.

FIG. 7 illustrates an example displayed by the device management apparatus 1 when the depot manager logs in. As described above, in this case, the device management apparatus 1 displays information about the number of devices in four states, i.e., Accepted, Stocked, Disposed, and Checked-out. Depending on the role of the logged-in user, the device management apparatus 1 may display different numerical values. Table 4 below illustrates the correspondence between the role of the user and the meaning of the numerical value displayed by the device management apparatus 1 on the dashboard screen.

**[Table 4]**

| USER | DEVICE STATE & FLAG | | | | PURPOSE |
|---|---|---|---|---|---|
| PURCHASE WORK MANAGER | Shipped | Delivered | Accepted | Declined | Confirm progress of Acceptance work |
| WAREHOUSE WORK MANAGER | Accepted | Stocked | Disposed | Checked-out | Confirm whether stock situation is appropriate? |
| | | | | | Confirm progress of Check-in and Check-out work |
| MAINTENANCE WORK MANAGER A | Installed AND Maintenance Requirement Flag: ON | Removed AND Maintenance Requirement Flag: ON | Removed AND Maintenance Requirement Flag: OFF | Installed AND Maintenance Requirement Flag: OFF | Maintenance plan |
| | | | | | Confirm progress of Maintenance work |
| MAINTENANCE WORK MANAGER B | Removed | Send-back Repair | Send-back Calibration | Shipped | Confirm progress of Send-back Repair and Calibration |

As illustrated in Table 4, the conditions of statistics information to be acquired can be changed according to the user's role. The purpose of displaying information for each role of the user is as illustrated in Table 4. The number of devices can be counted according to composite conditions of the current state of the device and the value of flag. For example, when the user is "maintenance work manager A", the device management apparatus 1 counts the number of devices that satisfy the following conditions (1) to (4).
(1) The state is "Installed", and maintenance requirement flag is ON.
(2) The state is "Removed", and maintenance requirement flag is ON.
(3) The state is "Removed", and maintenance requirement flag is OFF.
(4) The state is "Installed", and maintenance requirement flag is OFF.

It should be noted that the information about the number illustrated in Fig. 7 is for the "depot work manager" in Table 4.

The information illustrated in Table 4 is also be stored in storage unit 14 or storage unit 26 as similarly to Table 1, Table 2 and Table 3 described above.

The device management apparatus 1 may present information in the form of a device list.

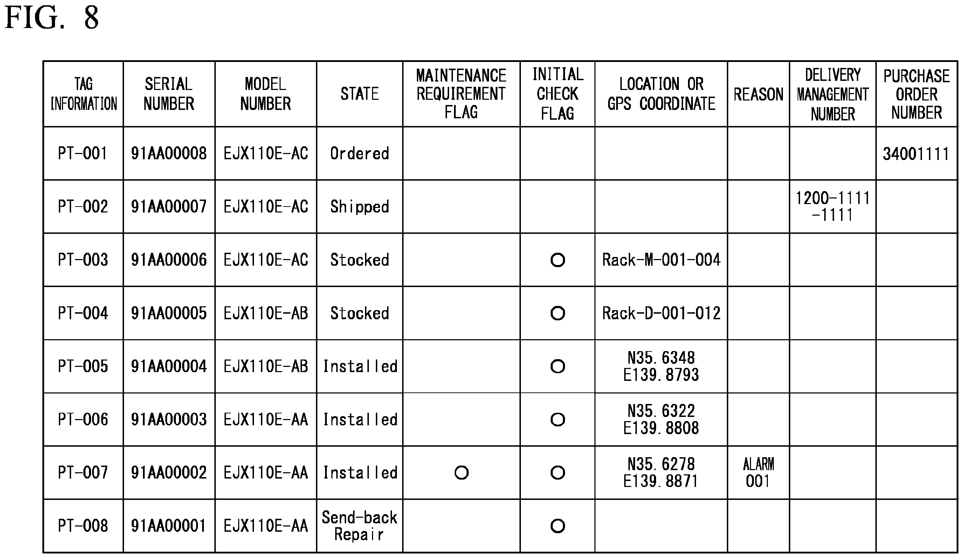

FIG. 8 is a schematic diagram illustrating a configuration example of information presented in a form of a device list by the device management apparatus 1 according to the embodiment. The device management apparatus 1 transmits this information in the form of device list to the PC 3 and the mobile terminal apparatus 2. Upon receiving information in the form of a device list, the PC 3 and the mobile terminal apparatus 2 display the information on a screen or the like. By referring to the information displayed in list form, the user can understand the devices included in the plant in the form of a list.

The illustrated device list includes items of tag information, serial number, model number, state (current state), maintenance requirement flag, initial check flag, location or GPS coordinate, reason, delivery management number, and purchase order number. The meaning of each data item is as described above.

When this device list is displayed on the screen of the PC 3 or the mobile terminal apparatus 2, the data of the specific items may be clickable.

For example, the data of GPS coordinate in FIG. 8 can be clicked. When the user performs an operation of clicking the GPS coordinate data, the map application is activated on the PC 3 or the mobile terminal apparatus 2 so that a map including the point corresponding to the GPS coordinate is displayed on the screen. It should be noted that the map data may be previously held by the PC 3 or the mobile terminal apparatus 2, or may be acquired from an external server apparatus via a communication line (such as the Internet).

Further, for example, the data of delivery management number may be configured to be clickable. When the user clicks on the data of the delivery management number, a browser screen displaying the website of the delivery company is launched so that the cargo tracking information about the delivery management number is displayed. The cargo tracking information during delivery is kept in a database connected to the delivery company's web server apparatus.

Also, for example, the data of the purchase order number may be configured to be clickable. When the user clicks on purchase order number, the screen for displaying the order content is launched. The information about the order content is included in the data extracted from the order management system, for example, and is held by the device management apparatus 1. Alternatively, the information about the order content may be acquired from the database of the device vendor.

For example, the device management apparatus 1 may have a function for searching devices. The state data may be configured to be clickable. Information about devices may be searchable on the screen with a search condition of state, for example, a list of devices of which current state is "Stocked" may be displayed. Data items other than the state may also be used as a search condition.

For example, data of a model number and a serial number may be configured to be clickable. When the user clicks on a model number or a serial number, document data of the specification document or work procedural manual of the device is displayed on the screen with a hyperlink of the web.

The device management apparatus 1 may include a function for presenting information to the user for the maintenance plan of the devices. Devices used in plants and the like are sometimes operated under harsh conditions, and such devices are replaced with new devices with a certain lifetime. The maintenance plan described here is for implementing such device replacement at an appropriate time period.

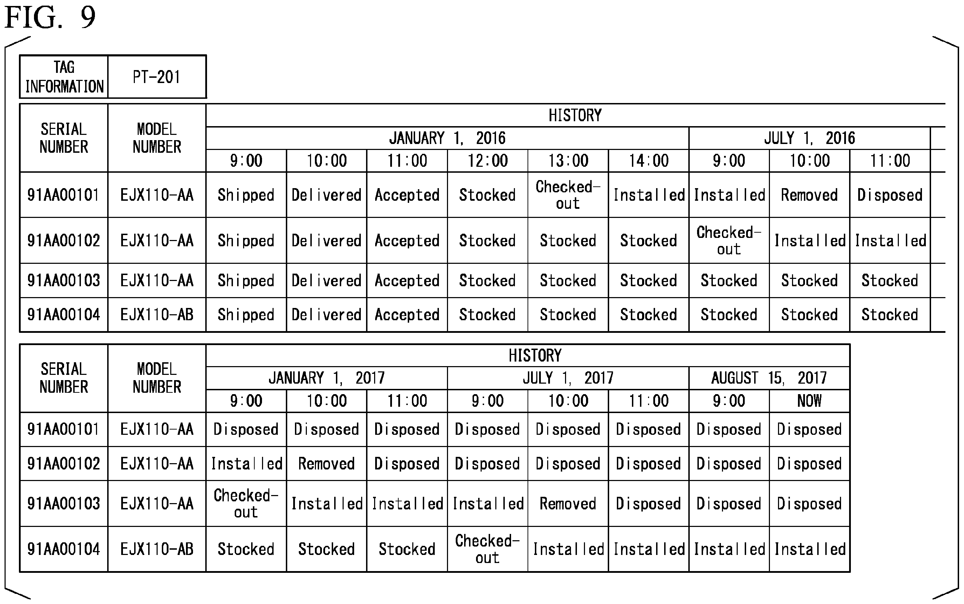

FIG. 9 is an example of data displayed on the screen of the PC 3 by the device management apparatus 1 and is a schematic diagram illustrating tag history data that can be used for a device maintenance plan.

The data example illustrated in FIG. 9 is data illustrating the history and the like of the states of a plurality of devices having the same tag information (PT-201) in a situation where device replacement is performed three times. The device management apparatus 1 displays the data of this state history by referring to the history data of the devices. In the example illustrated in FIG. 9, a total of four devices having serial numbers "91AA00101", "91AA00102", "91AA00103", "91AA00104" have had tag information "PT-201" at least once. The model numbers of these devices are "EJX110-AA", "EJX110-AA", "EJX110-AA", "EJX110-AB", respectively. The data illustrated in FIG. 9 includes the history of states of these four devices in the past. In FIG. 9, the history information about these four devices is split and displayed in two stages, but the data may be displayed in other forms (for example, scrollable in the horizontal direction).

In order to improve the visibility in the screen display, the history information may be displayed in different colors for respective states.

The example illustrated in FIG. 9 include the state of each device at multiple times on five dates, i.e., January 1, 2016, July 1, 2016, January 1, 2017, July 1, 2017, and August 15, 2017.

All of the four devices were in the state "Shipped" at time 09:00 on January 1, 2016. All of the four devices were in the state "Delivered" at time 10:00 on the same day. All of the four devices were in the state "Accepted" at the same time 11:00. All of the four devices were in the state "Stocked" at the same time at 12:00.

Thereafter, the device at the top, i.e., the device having the serial number "99AA00101" was in the state "Checked-out" at time 13:00 on January 1, 2016 and was in the state "Installed" at 14:00 on the same day. Thereafter, the device having the serial number "99AA00101" started to operate in the plant. The device having the serial number "99AA00101" was in the state "Installed" at time 09:00 on July 1, 2016 and was in state "Removed" at time 10:00 the same day, so that the serial number "99AA00101" was replaced. The device having the serial number "99AA00101" was in the state "Disposed" at time 11:00 on the same day. After that, the device having the serial number "99AA00101" was always in the state "Disposed".

The device having the serial number "99AA00102" was "Installed" in order to replace the device having serial number "99AA00101", and started to operate in the plant. Thereafter, the device having the serial number "99AA00102" was replaced with the device having serial number "99AA00103", so that the device having the serial number "99AA00102" was "Removed". Similarly, the device having the serial number "99AA00103" and the device having the serial number "99AA00104" also make state transition.

This data illustrates that the three replaced devices were Checked-out, Installed, Removed and Disposed at time points different by approximately half a year (6 months).

The device at the bottom, i.e., the device having the serial number "99AA00104" is in the state "Installed" at the present moment (as of August 15, 2017). Then, according to the history of three devices already replaced, the devices are disposed half a year after the Install, and therefore, this data indicates that it is appropriate to make a plan to remove and dispose the device having the serial number "99AA00104" around January 1, 2018, which is six months after the Install.

The manager who saw the data of FIG. 9 displayed on the screen of the PC 3 can set up a plan to procure and replace devices hose tag is "PT-201" at a pace of two devices per year. Also, based on this maintenance plan data, the device management apparatus 1 may generate budget planning data for purchasing devices for replacement. Alternatively, the manager can set up a plan to change the facility to a more durable model number.

Data indicating the history of tags shown in FIG. 9 may be displayed in other formats.

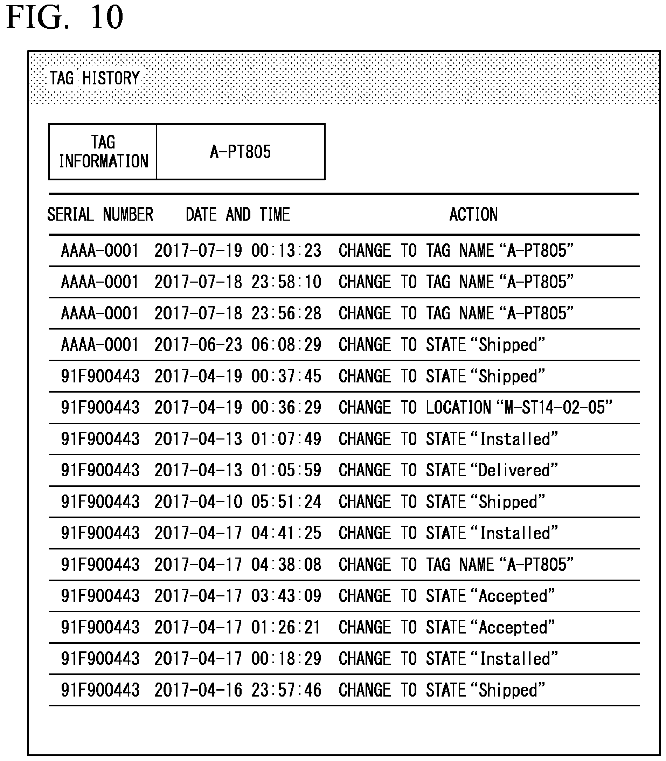

FIG. 10 is another example of data displayed on the screen of the PC 3 by the device management apparatus 1 according to the embodiment and illustrates tag history data that can be used for the device maintenance plan. As illustrated in FIG. 10, this tag history data is represented as actions in chronological order. In the example illustrated in FIG. 10, the data are arranged in descending order of the date and time. This example of data is history data for the tag information "A-PT805". This tag includes two devices having the serial numbers "AAAA-0001" and "91F900443".

The device management system 100 may realize a user interface that provides support to the user (staff member etc.) depending on the current state of the device when the user inputs information about an action for the device with the mobile terminal apparatus 2.

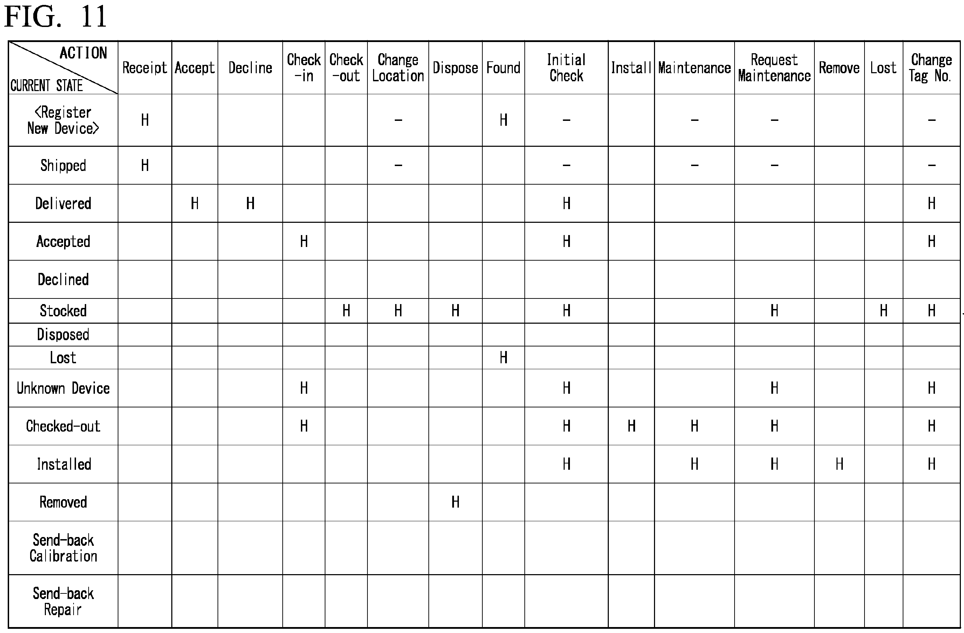

FIG. 11 is a schematic diagram illustrating definition information about user interface with which the mobile terminal apparatus 2 receives input of an action. More specifically, FIG. 11 illustrates a matrix representing display attributes based on a combination of the current states and options of actions. The matrix illustrated in FIG. 11 is an example of "definition of action candidate". According to this definition information, the mobile terminal apparatus 2 realizes a predetermined user interface.

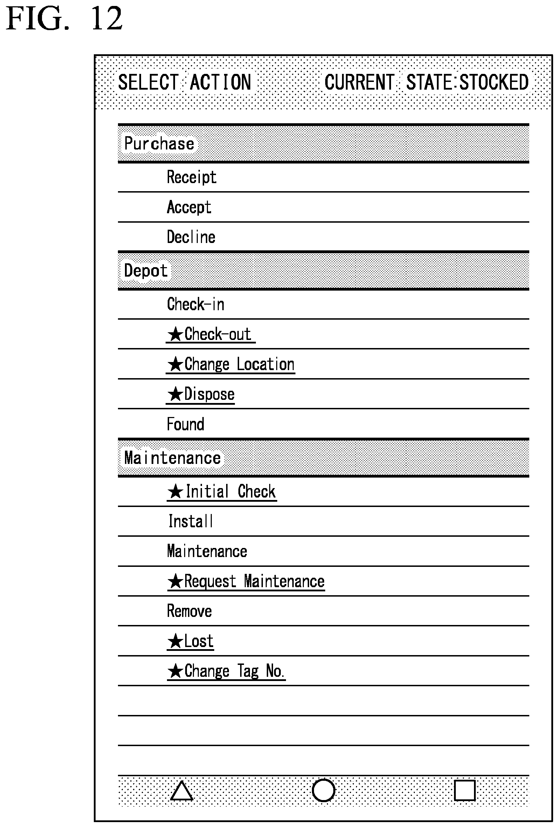

More specifically, the mobile terminal apparatus 2 displays a list of actions that can be options on the screen when the mobile terminal apparatus 2 receives a selection of an action for the device (see FIG. 12). At this time, the actions contained in the displayed list include only the options (actions) which are logically possible from (which are relevant to) the current state of the target device. In other words, actions logically impossible from the current state (e.g., actions that the user thinks are not required for the current state) are not displayed on the screen because such actions are excluded from the list. In the current state of the target device, actions that are more likely to be selected are displayed in an emphasized manner (emphasized) based on the instruction from the user etc., the frequency of the actions performed in the past, and the like. Other actions (i.e., actions that can be options but are relatively less likely to be selected) are grayed out so as to be inconspicuous. Examples of display in the emphasized manner (emphasis) include highlighting, underlining, blinking, and displaying at high luminance or in a noticeable color. The mobile terminal apparatus 2 may emphasize the actions by methods other than the above. Emphasis such as highlighting, underlining, displaying at high luminance, displaying in a noticeable color, and blinking are examples of "first display form". Graying out is an example of "second display form".

In the matrix shown in FIG. 11, the point where the current state and the action intersect indicates either "H", "-", or vacant field. Here, "H" indicates that the action is emphasized as an action candidate in the state. In addition, [-] indicates that the action is excluded from the selected candidate and is not displayed in the current state. In addition, vacant field indicates that the action is displayed as an action candidate in the current state, but is normally display (displayed in gray as explained above) without being emphasized. Information about this matrix is preset and stored in the storage unit 14 of the device management apparatus 1. The state transition table described above may substitute for the information about the matrix, or the information about the matrix may be generated on the basis of the state transition table described above. This matrix information may be stored in the storage unit 26 of the mobile terminal apparatus 2 as replication. The mobile terminal apparatus 2 refers to the information of the storage unit 14 or the storage unit 26 and displays the selection candidates of the actions.

FIG. 12 is a schematic diagram illustrating an example in which the mobile terminal apparatus 2 displays candidates of actions for the device on the screen. FIG. 12 illustrates a screen for the user to select an action with the mobile terminal apparatus 2. In the upper left portion of this screen, the character string "action selected" representing the current context is displayed. In addition, on the upper right portion of this screen, it is displayed that the current state of the device is "Stocked". In addition, on this screen, candidates of actions are displayed in the list. The candidates of these actions are divided into three groups "Purchase", "Depot", and "Maintenance". The group "Purchase" contains three actions: Receipt, Accept, and Decline. The group "Depot" contains five actions: Check-in, Check-out, Change Location, Dispose, and Found. The group "Maintenance" contains seven actions: Initial Check, Install, Maintenance, Request Maintenance, Remove, Lost, and Change tag No.

As illustrated in the matrix of FIG. 11, in the situation where the current state is "Stocked", the actions of Check-out, Location Change, Dispose, Initial Check, Request Maintenance, Lost, Change Tag No. are defined as "H". That is, on the screen of FIG. 12, the actions corresponding to "H" are emphasized (underlined with star in FIG. 12). In the same situation, the actions defined as "-" (not to be displayed) are not displayed. In the same situation, other actions are defined as vacant fields. Therefore, Receipt, Accept, Decline, Check-in, Found, Install, Maintenance, and Remove corresponding to the vacant fields are displayed with a non-emphasizing method (inconspicuously displayed in gray).

That is, the processing unit 21 of the mobile terminal apparatus 2 receives the information about the current state of the device from the device management apparatus 1, and refers to the definition (FIG. 11) of the type of action which can be taken for each predetermined type of current state to display only the actions included in the list on the screen as selectable actions.

Further, the processing unit 21 refers to the definition (FIG. 11) of the type of the action to be emphasized among the types of actions included in the above list, thereby emphasizing the actions which are to be displayed in a emphasized manner when displaying selectable actions on the screen.

Then, the processing unit 21 transmits the information about the type of the action selected by the user to the device management apparatus 1.

As described above, the device management system 100 stores the display attributes of the action candidates in the storage unit 14 or the storage unit 26 in advance, so that the device management system 100 displays, in a form that is easy to select, actions that are more likely to be selected on the screen of mobile terminal apparatus 2. That is, this makes it easy for the user of the mobile terminal apparatus 2 to operate the mobile terminal apparatus 2, and prevents an erroneous operation such as selecting an action which is not necessary.

According to the present embodiment, the following effects can be acquired.

Since the device management apparatus 1 stores and updates, as necessary, the current state of the device used in the plant and the like, the device management apparatus 1 can manage and find what situation each device is in.

Also, since the device management apparatus 1 stores the position of each device, the device management apparatus 1 can find the position of the device. In other words, the device management apparatus 1 manages each of the devices rather than managing the devices in units of model numbers. Therefore, even when multiple devices have the same model number, the device management apparatus 1 can manage and find the state, the position (the rack position, the GPS coordinate, etc.) and tag information for each of the multiple devices.

The device management apparatus 1 correctly finds the state (for example, states such as Shipped, Received, Accepted, Stocked) of each of the devices before Installation. Therefore, the number of spare parts for the entire device management system 100 can be correctly determined.

The device management apparatus 1 finds the actions of Request Maintenance and Maintenance. That is, the device management apparatus 1 finds that the maintenance work has been performed correctly. As a result, the manager can confirm whether maintenance work is performed correctly or not.

The device management apparatus 1 acquires and stores the GPS coordinate of the installed device. With this information, failing to install devices and wrongly installing devices (e.g., position error) can be found on the system.

The device management apparatus 1 finds the actions of Remove of an installed device and the state transition caused by Remove. With this information, an error in removing the device (for example, failing to remove the device, removing a wrong device, etc.) can be found on the system.

The device management apparatus 1 updates the tag information of the device, for example, when replacing the device. With this information, a mistake such as failing to change tag information (tag number) can be found on the system.

The device management apparatus 1 finds calibration of a device (Send-back Calibration, etc.) as an action, finds the state transition, and finds the history of the actions and states. This makes it possible for the user to understand the situation of implementation of calibration of the device on the system.

By using the device management system 100, information about the device can be registered by using the mobile terminal apparatus 2 at a site of, e.g., maintenance work. In other words, it is not necessary to perform work such as writing down information such as an action for a device, for example, on paper, and returning to the office to register the written information to the system. Information can be reflected in the device management system 100 at the site where the device is used. As a result, the efficiency of the maintenance work etc. is improved. In addition, inconsistency between the actual state of the device and the data registered in the system can be made less likely to occur.

The present embodiment has characteristic configuration as described below and produces unique effects.
[1] The processing unit 11 of the device management apparatus 1 derives a subsequent state of the device on the basis of the current state of the device and the action for the device by referring to a definition of a state transition defined in advance, and updates information about the current state of the device to the subsequent state. Therefore, the device management apparatus 1 can manage the situation of the device by using the state and the state transition clearly defined.
[2] The storage unit 14 of the device management apparatus 1 stores, for each device, information about a history of a state transition made in the past and a history of an action received in the past. Therefore, the device management apparatus 1 can output (e.g., display) not only the current situation of the device but also the history in the past.
   Furthermore, based on the history of the device in the past, the device can be updated, and a plan for procurement of the device can be made.
[3] The storage unit 14 of the device management apparatus 1 stores, for each of the devices, an initial check flag indicating whether an initial check of the device is completed or not and a maintenance requirement flag indicating whether maintenance of the device is to be carried out or not. Then, the processing unit 11 determines whether to update the values of the initial check flag and the maintenance requirement flag according to the definition of the state transition when information about an action is received from the mobile terminal apparatus 2. Therefore, whether to update each flag or not can be determined according to the state transition defined in advance. As a result, each flag can have an accurate value, and failing to perform initial check and maintenance can be prevented. In addition, based on these flags, the maintenance plan of the device can be carried out.
[4] The information about the action received by the processing unit 11 of the device management apparatus 1 from the mobile terminal apparatus 2 represents an action selected from the list of possible actions according to the current state of the device displayed in the screen of the mobile terminal apparatus 2. This makes the state be consistent with possible actions.
[5] The processing unit 11 of the device management apparatus 1 outputs statistics information representing the number of devices for each type of the current state at a predetermined timing. Therefore, the user (manager etc.) of the device management apparatus 1 can statistically understand the situations of the devices in each state. Therefore, the user can make a maintenance plan.
[6] The storage unit 14 of the device management apparatus 1 stores a determination condition which is a condition for causing an alarm or a condition for causing recommendation to the user. The determination unit 12 uses the information about the device to determine whether the determination condition is satisfied or not. Therefore, the device management apparatus 1 can generate an alarm or cause a recommendation to the user based on the information about the latest situation updated.
[7] The processing unit 21 of the mobile terminal apparatus 2 receives information about the current state of the device, refers to a definition of a list including types of possible actions for each type of current state defined in advance, and displays only the actions included in the list as selectable actions. In addition, the processing unit 21 transmits information indicating the type of the selected action to the device management apparatus 1. With such configuration, the mobile terminal apparatus 2 displays only action matching the current state of the device as selectable. This makes it easier for the user (staff member etc.) to select the correct action.
[8] The processing unit 21 of the mobile terminal apparatus 2 displays, in a emphasized manner, an action to be displayed in a emphasized manner, by referring to a definition of types of actions to be displayed in a emphasized manner, from among the types of actions included in the list. Therefore, the action that is more likely to be selected is displayed in a conspicuous manner. This makes it easier for the user to select an action that is more likely to occur depending on the situation.

It is to be noted that at least some of the functions of the device management apparatus 1, the mobile terminal apparatus 2, and the PC 3 in the embodiment described above may be realized by a computer. In that case, the functions may be realized by recording a program for realizing this function in a computer readable recording medium, loading the program recorded in this recording medium into the computer system, and executing the program. It should be noted that the term "computer system" as used herein includes an operating system (OS) and hardware such as peripheral devices. The term "computer readable recording medium" refers to a storage medium such as a flexible disk, a magneto-optical disk, a portable medium such as a ROM, a CD-ROM, a DVD-ROM, a USB memory, or a hard disk provided in a computer system. Further, the "computer readable recording medium" may include those that dynamically, temporarily hold the program such as a communication line when transmitting the program via a network such as the Internet or a communication line such as a telephone line, and those that old the program for a certain period of time such as a volatile memory inside the computer system which serves as a server or a client in that case. Furthermore, the above-mentioned program may be for realizing some of the above-mentioned functions, and may be realized by combining the above-mentioned functions with a program already recorded in the computer system.

Although the embodiment have been described above, the present invention can be further implemented according to the following modifications. Further, in a case where combinations are possible, a plurality of modifications may be combined and carried out.

According to a modification of the embodiment, on the screen (FIG. 7) displayed by the device management apparatus 1, when the value of the number of devices for each state is clicked, a list of devices corresponding to that state may be displayed.

In the above embodiment, a message about a change in the state from a previous day ("There is no change today since yesterday.") is displayed on the screen (FIG. 7) by the device management apparatus 1. However, according to a modification of the embodiment, the change in the state from any time (over any length of time) may be displayed. For example, the device management apparatus 1 may display a change in the state from any time, i.e., over any length of time that has been set, such as 10 minutes, 1 hour, 2 hours, 1 week, 10 days, or the like.

According to a modification of the embodiment, preset setting conditions may be stored in the storage unit 14 of the device management apparatus 1, and the determination unit 12 may determine whether or not the setting condition is satisfied at a predetermined timing. The predetermined timing is, for example, a timing with a predetermined time interval or a timing at which data related to the device is updated. As the setting condition, for example, an alarm condition can be set. For example, an alarm relating to the number of devices in a predetermined state, a length of a period during which a particular device is maintained in a predetermined state, a condition regarding the degree or the length of time period in which the number of particular devices is less than the appropriate inventory amount can be set as the alarm condition. Depending on the alarm condition, the device management apparatus 1 can appropriately output an alarm. As the setting condition, a recommendation (recommendation) condition can be set. For example, based on the recommendation condition, the device management apparatus 1 can recommend predetermined data processing or maintenance work to the user.

According to a modification of the embodiment, the device management apparatus 1 may make recommendation based on the vendor information acquired from the vendor side of the device. In that case, the device management apparatus 1 may have the following function. That is, the device management apparatus 1 may have a function (vender information acquisition unit) for acquiring the vendor information possessed by the vendor of the device in association with the serial number of the device.

The device management apparatus 1 has a function (user information acquisition unit) for acquiring information about the usage situation of the user who uses the device (the number of days of usage, operating time etc.). The device management apparatus 1 has a function (recommendation storage unit) that stores recommendation conditions set based on acquired vendor information and recommendation contents related to maintenance of the device in association with each other. The device management apparatus 1 has a function (determination unit) for determining whether or not the recommendation condition is satisfied based on the information about the usage situation of the device obtained by the function of the user information acquisition unit.

The device management apparatus 1 has a function (recommendation notification) for notifying the associated recommendation contents when it is determined that the recommendation condition is satisfied.

According to a modification of the embodiment, the device management apparatus 1 may have a function such as parts order (order of devices etc.), work order (work instruction), setting of scheduled parts order or work order, budget plan. Hyperlinks may be set on the web screen in order for the device management apparatus 1 to cooperate with the functions (parts order, work order, scheduled parts order setting, scheduled work order setting, budget plan, etc.) possessed by another apparatus or system.

In the above embodiment, the state transition of the device is performed based on the action input with the mobile terminal apparatus 2. According to a modification of the embodiment, instead of the action, a subsequent state may be input with the mobile terminal apparatus 2. The device management apparatus 1 sets the subsequent state, which has been input, as the state of the transition destination.

In the above embodiment, a staff member operates the mobile terminal apparatus 2 and inputs an action with the device. According to a modification of the embodiment, not only the staff member but also a manufacture personnel, a calibration personnel, a repair personnel, a sales personnel of the vendor may set the action with the mobile terminal apparatus 2.

According to a modification of the embodiment, when the mobile terminal apparatus 2 acquires the action information about the device, the position information (GPS coordinate) acquired by the position information acquisition unit 25 may be acquired together with the supplementary information about the action.

Although the embodiment of the present invention has been described above in detail with reference to the drawings, the specific configuration is not limited to this embodiment, and designs and the like within the scope not deviating from the gist of the present invention are included.

For example, the device management apparatus 1 may manage not only the plant but also devices installed in the related facilities outside the plant area.

As used herein, the following directional terms "front, back, above, downward, right, left, vertical, horizontal, below, transverse, row and column" as well as any other similar directional terms refer to those instructions of a device equipped with the present invention. Accordingly, these terms, as utilized to describe the present invention should be interpreted relative to a device equipped with the present invention.

The term "configured" is used to describe a component, unit or part of a device includes hardware and/or software that is constructed and/or programmed to carry out the desired function.

Moreover, terms that are expressed as "means-plus function" in the claims should include any structure that can be utilized to carry out the function of that part of the present invention.

The term "unit" is used to describe a component, unit or part of a hardware and/or software that is constructed and/or programmed to carry out the desired function. Typical examples of the hardware may include, but are not limited to, a device and a circuit.

While preferred embodiment of the present invention has been described and illustrated above, it should be understood that these are examples of the present invention and are not to be considered as limiting. Additions, omissions, substitutions, and other modifications can be made without departing from the scope of the present invention. Accordingly, the present invention is not to be considered as being limited by the foregoing description, and is only limited by the scope of the claims.

## Claims

1. A device management apparatus comprising:
a memory which stores device individual information which includes information about a current state of a device and which is information unique to the device; and
a processor configured to receive information about an action for the device from an external terminal apparatus, derive a subsequent state of the device on the basis of the current state of the device and the action for the device by referring to a definition of a state transition defined in advance, and make transition from the current state to the subsequent state.

2. The device management apparatus according to claim 1, wherein the memory stores, for each of the devices, information about a history of a state transition made in the past and a history of an action received in the past in association with each other.

3. The device management apparatus according to claim 1 or 2, wherein the memory stores, for each of the devices, an initial check flag indicating whether an initial check of the device is completed or not and a maintenance flag indicating whether maintenance of the device is to be carried out or not, and
when the processor receives information about the action from the terminal apparatus, the processor is configured to determine whether to update a value of at least one of the initial check flag and the maintenance flag according to the definition of the state transition.

4. The device management apparatus according to any one of claims 1 to 3, wherein information about the action received by the processor represents an action selected from a list of action candidate related to the current state of the device, the list being displayed on a screen of the terminal apparatus.

5. The device management apparatus according to any one of claims 1 to 4, wherein the processor is configured to output information based on a number of devices for each type of the current state at any given timing.

6. The device management apparatus according to any one of claims 1 to 5, wherein the memory stores a determination condition which is at least any one of a condition for causing an alarm or a condition for causing recommendation to a user,
wherein the device management apparatus further comprises a determination unit configured to determine whether information about the device processed by the processor satisfies the determination condition.

7. The device management apparatus according to claim 1, wherein the memory stores the definition of the state transition in advance,
the definition of the state transition indicates a correspondence between the current state of the device, the subsequent state of the device, and the action for the device,
the processor is configured to derive the subsequent state of the device by referring to the definition of the state transition on the basis of the received information about the action.

8. A terminal apparatus comprising:
a processor configured to receive information about a current state of a device from a device management apparatus for managing the device, display, as a list on a screen in a selectable manner, information about actions related to the current state by referring to a definition of an action candidate related to the current state defined in advance, and select information about an action from among the selectable actions; and
a communicator configured to transmit the information about the action selected by the processor to the device management apparatus.

9. The terminal apparatus according to claim 8, wherein the processor is configured to display, in an emphasized manner, the information about the selectable actions on the screen by referring to a definition of an action candidate to be emphasized from among the definition of the action candidates.

10. A device management system comprising:
the device management apparatus according to claim 1; and
the terminal apparatus according to claim 8.

11. A device management method performed by a device management apparatus for managing a device and a terminal apparatus for transmitting information about an action for the device to the device management apparatus,
wherein the device management method causes the device management apparatus to perform operations comprising:
storing, into a memory, device individual information which includes information about a current state of the device and which is information unique to the device; and
receiving information about an action for the device from the external terminal apparatus, deriving a subsequent state of the device on the basis of the current state of the device and the action for the device by referring to a definition of a state transition defined in advance, and making transition from the current state to the subsequent state,
wherein the device management method causes the terminal apparatus to perform operations comprising:
receiving information about the current state of the device from the device management apparatus for managing the device, displaying, as a list on a screen in a selectable manner, information about actions related to the current state by referring to a definition of an action candidate related to the current state defined in advance, and selecting information about an action from among the selectable actions; and
transmitting the selected information about the action to the device management apparatus.

12. A program for causing a computer having a memory which stores device individual information which includes information about a current state of a device and which is information unique to the device to function as a device management apparatus including:
a processor configured to receive information about an action for the device from an external terminal apparatus, derive a subsequent state of the device on the basis of the current state of the device and the action for the device by referring to a definition of a state transition defined in advance, and make transition from the current state to the subsequent state.

13. A program for causing a computer to function as a terminal apparatus including:
a processor configured to receive information about a current state of a device from a device management apparatus for managing the device, display, as a list on a screen in a selectable manner, information about actions related to the current state by referring to a definition of an action related to the current state defined in advance, and select information about an action from among the selectable actions; and
a communicator configured to transmit the information about the action selected by the processor to the device management apparatus.

14. A computer readable medium storing a program for causing a computer having a memory which stores device individual information which includes information about a current state of a device and which is information unique to the device to function as a device management apparatus including:
a processor configured to receive information about an action for the device from an external terminal apparatus, derive a subsequent state of the device on the basis of the current state of the device and the action for the device by referring to a definition of a state transition defined in advance, and make transition from the current state to the subsequent state.

15. A computer readable medium storing a program for causing a computer to function as a terminal apparatus including:
a processor configured to receive information about a current state of a device from a device management apparatus for managing the device, display, as a list on a screen in a selectable manner, information about actions related to the current state by referring to a definition of an action related to the current state defined in advance, and select information about an action from among the selectable actions; and
a communicator configured to transmit the information about the action selected by the processor to the device management apparatus.
